# EUROPEAN PATENT SPECIFICATION

(11) **EP 4 284 702 B1**
(45) Date of publication and mention of the grant of the patent: **22.01.2025**
(21) Application number: 22705135.6
(22) Date of filing: 27.01.2022
(51) Int. Cl.: B62K 21/18, B62K 21/12

(54) **BICYCLE HANDLEBAR STEM**
FAHRRADLENKER-VORBAU
POTENCE DE GUIDON DE VÉLO

(30) Priority: 28.01.2021 IT 202100001697
(43) Date of publication of application: 06.12.2023
(73) Proprietor: Ursus S.P.A., 36027 Rosà (VI) (IT)
(72) Inventor: FERRONATO, Mirko, 36027 ROSÀ (VI) (IT); FERRONATO, Sergio, 36027 ROSÀ (VI) (IT); GENOVESE, Marco, 30030 PIANIGA (VE) (IT); FERRONATO, Simone, 36027 ROSÀ (VI) (IT)
(74) Representative: Marchioro, Paolo
(86) International application number: PCT/IB2022/050723
(87) International publication number: WO 2022/162579

(56) References cited:
- WO-A1-00/30923
- WO-A1-00/30923
- CN-A- 108 749 987
- CN-A- 108 749 987

## Description

The invention relates to a handlebar group for bicycles.

A 'handlebar group' means a set of components comprising a handlebar and a handlebar attachment.

The handlebar attachment, also known as "stem", is the component that connects the handlebar with the fork tube of a bicycle.

Nowadays, the handlebar stems of the "ahead-set" type are prevalently widespread; a handlebar stem of the ahead-set type generally comprises:
- a front fixing head for a handlebar;
- a rear fixing collar for a tube of a fork;
- a central extension, i.e. a central body that joins the front head to the rear collar.

A handlebar attachment of the prior art is shown for example in the document WO 00/30923 A1. This document shows an arrangement with a half circular shaped front body for clamping the handlebar, which front body is connected to the head tube by two threaded tension rods.

There are essentially two measurements for the handlebar stem: the length of the central extension and the angle of inclination between the axis of the fork tube and the direction of development of the central extension.

The length of the central extension is defined by the distance between the centre of the rear collar and the centre of the front head; stems with a length of between 90 mm and 130 mm are normally used, although there are smaller or larger sizes, in order to adapt the bicycle frame as far as possible to the morphology and ergonomics of the rider.

These handlebar stems, although widespread and popular, have some limitations and drawbacks.

A first limitation is due to the fact that, generally, the front head is also an openable collar, of the full opening type, that is to say, the front head comprises a removable front cover, or 'faceplate', the removal of which allows the insertion of the central section of the handlebar inside the front head, without having to dismount the brake levers and other elements already mounted on the handlebar, which is therefore a very convenient solution for mounting such elements; the front cover is generally fixed to the fixed portion of the front head, which is integral with the central extension, by means of two opposite pairs of screws.

This means that each time the handlebar has to be mounted to the handlebar stem or dismounted therefrom, four screws have to be manoeuvred, resulting in relatively long execution times in both mounting and dismounting steps.

A second limitation of the handlebar stems of known type lies in the fact that, similarly to the front head, the rear collar also has a clamping system for fixing the handlebar stem to the fork tube protruding from the headset.

This clamping system generally includes screwing, in the assembly step, or unscrewing, in the dismounting step, two screws, with relative execution times. A third limitation of the handlebar stems of known type is due to the fact that in order to change the length of the central extension of a handlebar stem it is necessary to remove the same handlebar stem and replace it with another handlebar stem having a central extension with different length; this replacement obviously involves a cost in terms of purchasing a new stem, and in terms of time, since it is necessary to remove the handlebar from the handlebar stem and the handlebar stem from the fork, and then to carry out the steps of mounting the new handlebar stem.

The task of the present invention is that of developing a handlebar group for bicycles able to overcome the mentioned drawbacks and limits of the prior art. In particular, an object of the invention is to develop a handlebar group that allows for a faster mounting of the handlebar to the handlebar stem and the relative dismounting therefrom.

Another object of the invention is to develop a handlebar group that allows for a faster mounting of the handlebar stem to the fork tube and the relative dismounting therefrom.

A further object of the invention is to develop a handlebar group in which the distance between the centre of the rear collar and the centre of the front head can be changed without having to replace the entire handlebar stem.

Still, an object of the invention is to develop a handlebar group that is no less robust and reliable than handlebar groups of known type.

The task as well as the aforementioned objects are achieved by a handlebar group for bicycles according to claim 1.

Further characteristics of the handlebar group for bicycles according to claim 1 are described in the dependent claims.

The aforesaid task and objects, together with the advantages which will be mentioned hereinafter, are indicated by the description of an embodiment of the invention, which is given by way of non-limiting example with reference to the attached drawings, where:
- Figure 1 represents a perspective view of a handlebar group according to the invention;
- Figure 2 represents a perspective cut-away view of the handlebar group according to the invention;

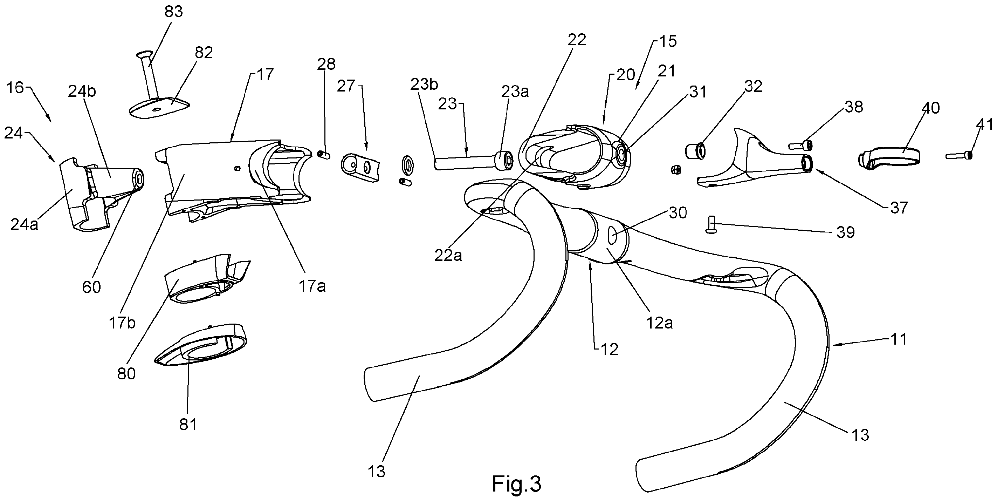

- Figure 3 represents a perspective exploded view of the handlebar group according to the invention;
- Figure 4 represents a perspective view in section according to a vertical longitudinal section plane of the handlebar group according to the invention, in assembled view;
- Figure 5 represents a perspective view in section according to a horizontal longitudinal section plane of the handlebar group according to the invention, in assembled view;
- Figure 6 represents a perspective view in section according to a vertical cross-sectional plane of the handlebar group according to the invention, in assembled view;
- Figure 7 represents an exploded perspective view of a set of components of the handlebar group according to the invention;
- Figure 8 represents a different perspective view of the exploded view of Figure 7.

With reference to the cited figures, a handlebar group for bicycles according to the invention is indicated as a whole by number **10.**

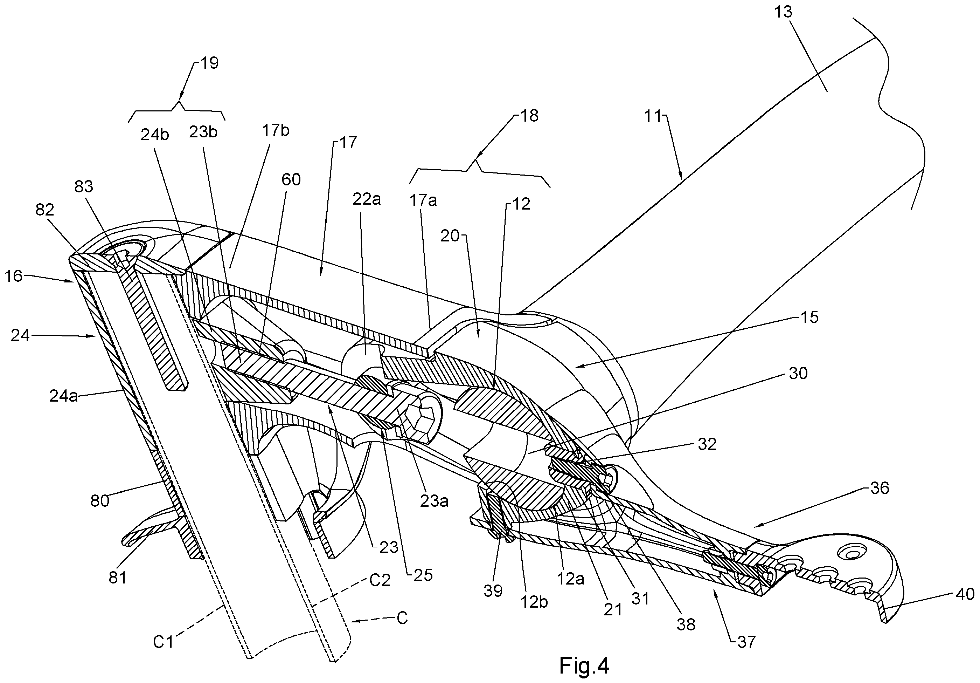

Said handlebar group **10** comprises:
- a handlebar **11,** comprising in turn a central section **12,** for fixing to a handlebar stem **14,** and two lateral gripping sections **13**;
- a handlebar stem **14** comprising in turn:
   - a front head **15,** comprising first fixing means **18** configured for locking the handlebar **11**;
   - a rear collar **16,** comprising second fixing means **19** configured for fixing to a tube of a fork; a tube of a fork is exemplified in Figures 4, 7 and 8 and is indicated therein by the letter **C**;
   - a central extension **17,** for connection between the front head **15** and the rear collar **16.**

The peculiarity of the handlebar group **10** according to the invention lies in the fact that the first fixing means **18** of the handlebar **11** comprise:
- a front tubular body **20** shaped to accommodate the central section **12** of the handlebar **11**; said front tubular body **20** comprises a front part **21** shaped to surround a front face **12a** of the central section **12,** and a rear part **22** shaped to couple with a first end **23a** of a tightening rod **23,**
- and a front portion **17a** of the central extension **17,** shaped to rest on a rear face **12b** of the central section **12** of said handlebar **11.**

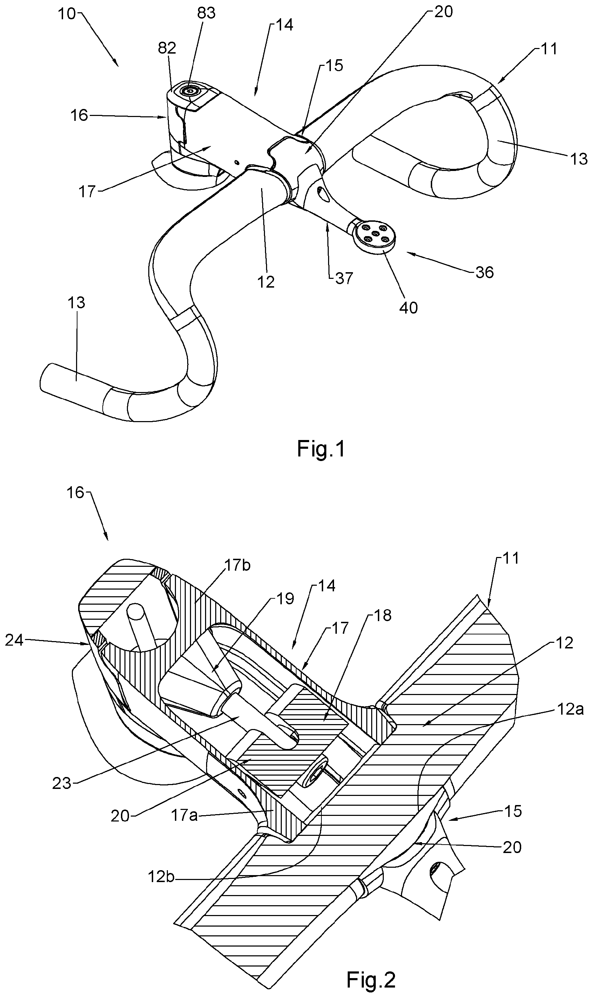

The central section **12** of the handlebar **11** is therefore locked between the front part **21** of the front tubular body **20** and the front portion **17a** of the central extension **17,** as clearly visible in Figures 2, 4 and 5.

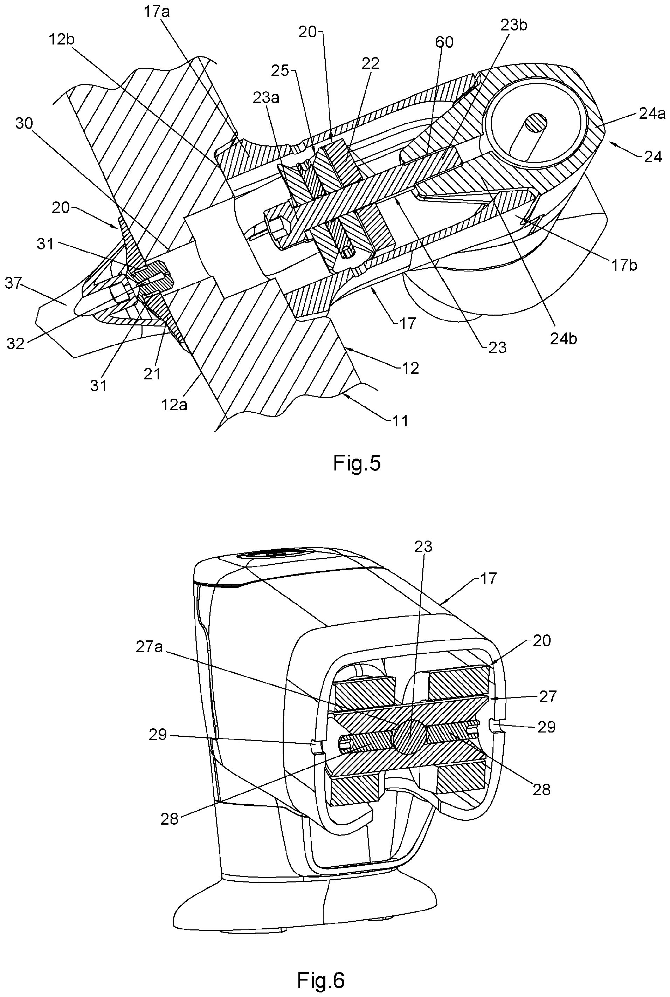

The second fixing means **19** comprise:
- a rear tubular body **24** shaped to accommodate an end section of a tube **C** of a fork, the latter being schematically illustrated in Figures 4, 7 and 8; the rear tubular body **24** comprises a rear part **24a** shaped to surround a rear face **C1** of said end section of a tube **C** of a fork, and a front part **24b** shaped to couple with a second end **23b** of the tightening rod **23,** as clearly visible in Figures 4 and 5,
- and a rear portion **17b** of the central extension **17,** shaped to rest on a front face **C2** of the end section of said tube **C.**

The tightening rod **23** is positioned to longitudinally cross the central extension **17,** as visible in the sections of Figures 4 and 5, and is configured to connect the front tubular body **20** and the rear tubular body **24.**

The longitudinal direction is intended to be a direction from the front head to the rear collar.

The central extension **17** is therefore wedged between the front tubular body **20** and the rear tubular body **24.**

This central extension **17** is defined by a tubular body with longitudinal development.

By means of such a structure, the handlebar group **10** according to the invention, by mounting and screwing only the tightening rod **23,** allows to lock both the first fixing means **18,** and thus to tighten the front head **15** on the central section **12** of the handlebar **11,** and the second fixing means **19,** and thus to tighten the rear collar **16** around the tube **C** of a fork.

The front head **15** is intended to comprise the front tubular body **20** and the front portion **17a** of the central extension **17.**

The rear collar **16** is intended to comprise the rear tubular body **24** and the rear portion **17b** of the central extension **17.**

In particular, in the embodiment described herein by way of non-limiting example of the invention, the tightening rod **23** comprises a hooking head and a shank.

In particular, in the present embodiment, the tightening rod **23** consists of a screw, the head of which defines the first end **23a** of the tightening rod **23** and the shank of which comprises the second end **23b** of the same tightening rod **23**; the head of the screw is housed inside the front tubular body **20.**

The front tubular body **20** has, at the rear part **22** thereof, a rear opening **22a** shaped to allow the passage of the shank of the tightening rod **23.**

This rear opening **22a** is obviously shaped in such a way as to prevent the passage of the hooking head of the tightening rod **23,** i.e. of the first end **23a** of the tightening rod **23.**

The handlebar group **10** according to the invention also comprises an anti-unscrewing locking device **25** for the tightening rod **23.**

In the present embodiment, this anti-unscrewing locking device **25** comprises, inside the front tubular body **20**:
- at the rear part **22** of the front tubular body **20,** a seat **26** for housing a transverse insert **27**;
- a transverse insert **27** comprising a longitudinal through-hole **27a** having a cross-section such as to be crossed by the shank of the tightening rod **23** and to define an abutment edge for the head of the tightening rod **23**; said transverse insert **27** also comprises at least one transverse threaded hole **27b** which develops until it opens onto the longitudinal through-hole **27a**; preferably, the transverse insert **27** comprises two opposite transverse threaded holes **27b,** which develop until they open onto the longitudinal through-hole **27a**;
- at least one locking grub screw **28,** configured to be screwed into a corresponding transverse threaded hole **27b** until intercepting the shank of the tightening rod **23**; preferably, the anti-unscrewing locking device **25** comprises two opposite locking grub screws **28,** configured to be screwed into a corresponding transverse threaded hole **27b** until intercepting the shank of the tightening rod **23.**

The central extension **17** comprises, at each of the locking grub screws **28,** a lateral through-hole **29** for the passage of a screwing tool for screwing and unscrewing the locking grub screws **28.**

The central section **12** of the handlebar **11** has a first longitudinal through-hole **30,** configured to allow the passage of a tool for screwing the tightening rod **23.** The front part **21** of the front tubular body **20** has a second longitudinal through-hole **31,** arranged coaxial to the longitudinal through-hole **30** of the central section **12** of the handlebar **11**; this second longitudinal through-hole **31** is also configured to allow the passage of a tool for screwing the tightening rod **23.**

In the embodiment described herein, the tightening rod **23** has a cylindrical head with a recessed hexagon; for screwing and unscrewing this tightening rod **23,** a correspondingly sized Allen key is introduced through the first longitudinal through-hole 30 and the second longitudinal through-hole **31.**

The second longitudinal through-hole **31** can advantageously be closed by a plug **32.**

The handlebar group **10** also comprises a front bracket **36** configured to support an accessory between the lateral gripping sections **13** of the handlebar **11.**

Said front bracket **36** comprises, for example, a supporting appendage **37,** fixed at the front to the front tubular body **20,** for example by means of a screw **38** screwed to a corresponding hole defined on the plug **32** for closing the second longitudinal through-hole **31.**

The supporting appendage **37** can also be fixed below the front tubular body **20,** for example by means of a second screw **39.**

The supporting appendage **37** in turn supports a fixing plate **40,** shaped for coupling with a hooking element for fixing an on-board computer, the latter being of a known type.

The fixing plate **40** is fixed to the supporting appendage **37** by means of, for example, a front screw **41.**

The front portion **17a** of the central extension **17** has two lateral recesses **50** that are counter-shaped with respect to the surface of the rear face **12b** of the central section **12** of the handlebar **11.**

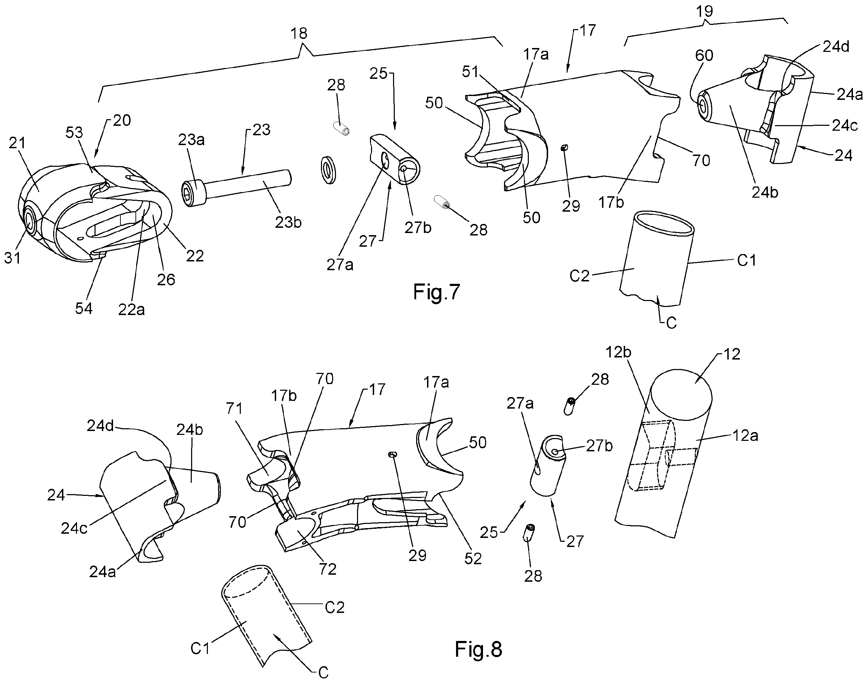

The same front portion **17a** also has an upper recess **51** and a lower recess **52,** each of which is shaped for coupling with a corresponding stepped portion **53** and **54** defined on the front tubular body **20**; these details are indicated in Figure 7.

In the embodiment described herein by way of non-limiting example of the invention, the rear tubular body **24** comprises a rear part **24a** shaped like a cylindrical arc.

The front part **24b** is defined by a truncated conical relief developing in the forward direction, having a threaded hole **60** configured for screwing with the shank of the tightening rod **23.**

The front part **24b** is connected to the rear part **24a** by two lateral portions **24c** of the rear tubular body **24.**

The rear portion **17b** of the central extension **17** has two lateral recesses **70** each of which shaped for coupling with a corresponding stepped portion **24d** defined at a lateral portion **24c** of the rear tubular body **24.**

The same rear portion **17b** also has an upper recess **71** and a lower recess **72,** each of which is shaped like an arc of a circle, i.e. configured to rest against the front face **C2** of the tube **C.**

The handlebar group **10** can also be intended to comprise one or more spacers **80** and **81** for the rear collar **16.**

The handlebar group **10** comprises a cover **82** for the rear collar **16** and a locking screw **83** for locking the cover **82** and for expanding the expander element located inside the rear collar **16,** said expander element not being depicted as it is to be understood as being of a known type.

It has in practice been established that the invention achieves the intended task and objects.

In particular, with the invention, a handlebar group has been developed which allows for a faster mounting of the handlebar to the handlebar stem and to the fork tube and relative dismounting from them, thanks to the first fixing means for the front head and the second fixing means for the rear collar, which are both operated by means of a single same tightening rod, which allows both to be opened and closed at the same time.

Furthermore, with the invention, a handlebar group has been developed which allows the central extension to be mounted and dismounted, which can then be selected at the length most suitable for the user from a plurality of central extensions that are technically equivalent and consistent with the present invention.

Thus, the invention has developed a handlebar group in which the distance between the centre of the rear collar and the centre of the front head can be changed without having to replace the entire handlebar stem, as only the central extension needs to be replaced.

In addition, the invention has developed a handlebar group that is no less robust and reliable than handlebar groups of known type.

Further, with the invention a particularly aerodynamically efficient handlebar group has been developed, since, thanks to the absence of the four front tightening screws and the absence of a front cover provided with as many angles arranged to receive the head of said screws, and thanks to the single tightening rod located inside the handlebar stem and therefore irrelevant in aerodynamic terms, the front part of the handlebar stem head can be shaped in a more aerodynamic and performing way than the handlebar stem heads of known type.

The invention thus conceived is susceptible to numerous modifications and variants, all of which are within the scope of the inventive concept defined by the appended claims; moreover, all the details may be replaced by other technically equivalent elements.

In practice, the components and materials used, as well as the dimensions and shapes, as long as they are compatible with the specific use, can be any according to requirements and the state of the art.

If the features and techniques mentioned in any claim are followed by reference signs, such reference signs are to be intended for the sole purpose of increasing the intelligibility of the claims and, consequently, such reference signs have no limiting effect on the interpretation of each element identified by way of example by these reference signs.

## Claims

1. Handlebar group (10) for bicycles, comprising:
- a handlebar (11), comprising a central section (12), for fixing to a handlebar stem (14), and two lateral gripping sections (13);
- a handlebar stem (14) comprising in turn:
- a front head (15), comprising first fixing means (18) configured for locking said handlebar (11);
- a rear collar (16), comprising second fixing means (19) configured for fixing to a tube of a fork;
- a central extension (17), for connection between said front head (15) and said rear collar (16);
**characterized in that** said first fixing means (18) of the handlebar (11) comprise:
- a front tubular body (20) shaped to accommodate said central section (12) of said handlebar (11), said front tubular body (20) comprising a front part (21) shaped to surround a front face (12a) of said central section (12), and a rear part (22) shaped to couple with a first end (23a) of a tightening rod (23),
- and a front portion (17a) of said central extension (17), shaped to rest on a rear face (12b) of said central section (12) of said handlebar (11);
said central section (12) of said handlebar (11) being locked between said front part (21) of said front tubular body (20) and said front portion (17a) of said central extension (17);
said second fixing means (19) comprising:
- a rear tubular body (24) shaped to accommodate an end section of a tube of a fork, said rear tubular body (24) comprising a rear part (24a) shaped to surround a rear face of said end section of a tube of a fork, and a front part (24b) shaped to couple with a second end (23b) of said tightening rod (23),
- and a rear portion (17b) of said central extension (17), shaped to rest on a front face of said end section of said tube;
said tightening rod (23) being positioned to longitudinally cross said central extension (17), and being configured to connect said front tubular body (20) and said rear tubular body (24).

2. Handlebar group according to claim 1, **characterized in that** said tightening rod (23) comprises a hooking head and a shank.

3. Handlebar group according to one or more of the preceding claims, **characterized in that** said front tubular body (20) has, at a rear part thereof (22), a rear opening (22a) shaped to allow the passage of said shank of said tightening rod (23).

4. Handlebar group according to one or more of the preceding claims, **characterized in that** it comprises an anti-unscrewing locking device (25) for said tightening rod (23).

5. Handlebar group according to one or more of the preceding claims, **characterized in that** said central section (12) of said handlebar (11) has a first longitudinal through-hole (30), configured to allow passage of a tool for screwing said tightening rod (23).

6. Handlebar group according to one or more of the preceding claims, **characterized in that** said front part (21) of said front tubular body (20) has a second longitudinal through-hole (31), arranged coaxial to said first longitudinal through-hole (30) of said central section (12) of said handlebar (11), said second longitudinal through-hole (31) being configured to allow the passage of a tool for screwing the tightening rod (23).

7. Handlebar group according to one or more of the preceding claims, **characterized in that** said front portion (17a) of said central extension (17) has two lateral recesses (50) that are counter-shaped with respect to the surface of the rear face (12b) of the central section (12) of the handlebar (11).

8. Handlebar group according to one or more of the preceding claims, **characterized in that** said front portion (17a) has an upper recess (51) and a lower recess (52), each of which is shaped for coupling with a corresponding stepped portion (53, 54) defined on said front tubular body (20).

9. Handlebar group according to one or more of the preceding claims, **characterized in that** said rear tubular body (24) comprises a rear part (24a) shaped like a cylindrical arc, said front part (24b) being defined by a truncated conical relief developing in a forward direction, having a threaded hole (60) configured to screw said tightening rod (23) with said shank, said front part (24b) being connected to said rear part (24a) by means of two lateral portions (24c) of said rear tubular body (24).

10. Handlebar group according to one or more of the preceding claims, **characterized in that** said rear portion (17b) of said central extension (17) has two lateral recesses (70) each of which is shaped for coupling with a corresponding stepped portion (24d) defined at a lateral portion (24c) of said rear tubular body (24), said rear portion (17b) having an upper recess (71) and a lower recess (72), each of which is shaped like an arc of a circle, that is configured to rest against a front face of a tube of a fork.

## Patentansprüche

1. Lenkergruppe (10) für Fahrräder, umfassend:
- einen Lenker (11), der einen zentralen Teilbereich (12) zum Befestigen an einem Lenkervorbau (14) und zwei seitliche Griffteilbereiche (13) umfasst;
- einen Lenkervorbau (14), der wiederum Folgendes umfasst:
- einen vorderen Kopf (15), der erste Befestigungsmittel (18) umfasst, die konfiguriert sind, um den besagten Lenker (11) zu arretieren;
- einen hinteren Kragen (16), der zweite Befestigungsmittel (19) umfasst, die zum Befestigen an ein Rohr einer Gabel konfiguriert sind;
- eine zentrale Verlängerung (17) zur Verbindung zwischen dem besagten vorderen Kopf (15) und dem besagten hinteren Kragen (16);
**dadurch gekennzeichnet, dass** die besagten ersten Befestigungsmittel (18) des Lenkers (11) Folgendes umfassen:
- einen vorderen rohrförmigen Körper (20), der so geformt ist, dass er den besagten zentralen Teilbereich (12) des besagten Lenkers (11) unterbringt, wobei der besagte vordere rohrförmige Körper (20) Folgendes umfasst: ein vorderes Teil (21), das so geformt ist, dass es eine vordere Fläche (12a) des besagten zentralen Teilbereichs (12) umgibt, und ein hinteres Teil (22), das so geformt ist, dass es mit einem ersten Ende (23a) einer Spannstange (23) gekoppelt ist,
- und einen vorderen Abschnitt (17a) der besagten zentralen Verlängerung (17), der so geformt ist, dass er auf einer hinteren Fläche (12b) des besagten zentralen Teilbereichs (12) des besagten Lenkers (11) aufliegt;
wobei der besagte zentrale Teilbereich (12) des besagten Lenkers (11) zwischen dem besagten vorderen Teil (21) des besagten vorderen rohrförmigen Körpers (20) und dem besagten vorderen Abschnitt (17a) der besagten zentralen Verlängerung (17) arretiert ist;
wobei die besagten zweiten Befestigungsmittel (19) Folgendes umfassen:
- einen hinteren rohrförmigen Körper (24), der so geformt ist, dass er einen Endteilbereich eines Rohrs einer Gabel unterbringt, wobei der besagte hintere rohrförmige Körper (24) Folgendes umfasst: ein hinteres Teil (24a), das so geformt ist, dass es eine hintere Fläche des besagten Endteilbereichs eines Rohrs einer Gabel umgibt, und ein vorderes Teil (24b), das so geformt ist, dass es mit einem zweiten Ende (23b) der besagten Spannstange (23) gekoppelt ist,
- und einen hinteren Abschnitt (17b) der besagten zentralen Verlängerung (17), der so geformt ist, dass er auf einer vorderen Fläche des besagten Endteilbereichs des besagten Rohrs aufliegt;
wobei die besagte Spannstange (23) so positioniert ist, dass sie die besagte zentrale Verlängerung (17) längs kreuzt, und so konfiguriert ist, dass sie den besagten vorderen rohrförmigen Körper (20) und den besagten hinteren rohrförmigen Körper (24) verbindet.

2. Lenkergruppe nach Patentanspruch 1, **dadurch gekennzeichnet, dass** die besagte Spannstange (23) einen Hakenkopf und einen Schaft umfasst.

3. Lenkergruppe nach einem oder mehreren der vorhergehenden Patentansprüche, **dadurch gekennzeichnet, dass** der besagte vordere rohrförmige Körper (20) in einem hinteren Teil davon (22) eine hintere Öffnung (22a) aufweist, die so geformt ist, dass sie den Durchgang des besagten Schaftes der besagten Spannstange (23) ermöglicht.

4. Lenkergruppe nach einem oder mehreren der vorhergehenden Patentansprüche, **dadurch gekennzeichnet, dass** sie eine Arretiervorrichtung (25) mit Aufschraubsicherung für die besagte Spannstange (23) umfasst.

5. Lenkergruppe nach einem oder mehreren der vorhergehenden Patentansprüche, **dadurch gekennzeichnet, dass** der besagte zentrale Teilbereich (12) des besagten Lenkers (11) ein erstes Längsdurchgangsloch (30) aufweist, das so konfiguriert ist, dass es den Durchgang eines Werkzeugs zum Verschrauben der besagten Spannstange (23) ermöglicht.

6. Lenkergruppe nach einem oder mehreren der vorhergehenden Patentansprüche, **dadurch gekennzeichnet, dass** das besagte vordere Teil (21) des besagten vorderen rohrförmigen Körpers (20) ein zweites Längsdurchgangsloch (31) aufweist, das koaxial zum besagten ersten Längsdurchgangsloch (30) des besagten zentralen Teilbereichs (12) des besagten Lenkers (11) angeordnet ist, wobei das besagte zweite Längsdurchgangsloch (31) so konfiguriert ist, dass es den Durchgang eines Werkzeugs zum Verschrauben der Spannstange (23) ermöglicht.

7. Lenkergruppe nach einem oder mehreren der vorhergehenden Patentansprüche, **dadurch gekennzeichnet, dass** der besagte vordere Abschnitt (17a) der besagten zentralen Verlängerung (17) zwei seitliche Aussparungen (50) aufweist, die in Bezug auf die Oberfläche der hinteren Fläche (12b) des zentralen Teilbereichs (12) des Lenkers (11) gegengeformt sind.

8. Lenkergruppe nach einem oder mehreren der vorhergehenden Patentansprüche, **dadurch gekennzeichnet, dass** der besagte vordere Abschnitt (17a) eine obere Aussparung (51) und eine untere Aussparung (52) aufweist, von denen jede zum Koppeln mit einem entsprechenden Stufenabschnitt (53, 54), der am besagten vorderen rohrförmigen Körper (20) definiert ist, geformt ist.

9. Lenkergruppe nach einem oder mehreren der vorhergehenden Patentansprüche, **dadurch gekennzeichnet, dass** der besagte hintere rohrförmige Körper (24) ein zylinderbogenförmiges hinteres Teil (24a) umfasst, wobei das besagte vordere Teil (24b) durch ein kegelstumpfförmiges Relief, das sich vorwärts entwickelt, definiert ist, das ein Gewindeloch (60) aufweist, das konfiguriert ist, um die besagte Spannstange (23) mit dem besagten Schaft zu verschrauben, wobei das besagte vordere Teil (24b) mit dem besagten hinteren Teil (24a) über zwei seitliche Abschnitte (24c) des besagten hinteren rohrförmigen Körpers (24) verbunden ist.

10. Lenkergruppe nach einem oder mehreren der vorhergehenden Patentansprüche, **dadurch gekennzeichnet, dass** der besagte hintere Abschnitt (17b) der besagten zentralen Verlängerung (17) zwei seitliche Aussparungen (70) aufweist, von denen jede zum Koppeln mit einem entsprechenden Stufenabschnitt (24d) geformt ist, der an einem seitlichen Abschnitt (24c) des besagten hinteren rohrförmigen Körpers (24) definiert ist, wobei der besagte hintere Abschnitt (17b) eine obere Aussparung (71) und eine untere Aussparung (72) aufweist, von denen jede wie ein Kreisbogen geformt ist, der so konfiguriert ist, dass er an einer vorderen Fläche eines Rohrs einer Gabel anliegt.

## Revendications

1. Groupe de guidon (10) pour bicyclettes, comprenant:
- un guidon (11), comprenant une section centrale (12), destinée à être fixée à une tige de guidon (14), et deux sections de préhension latérales (13);
- une tige de guidon (14) comprenant à son tour:
- une tête avant (15), comprenant de premiers moyens de fixation (18) configurés pour verrouiller ledit guidon (11);
- un collier arrière (16), comprenant de deuxièmes moyens de fixation (19) configurés pour la fixation à un tube d'une fourche;
- une extension centrale (17) pour la connexion entre ladite tête avant (15) et ledit collier arrière (16);
**caractérisé en ce que** lesdits premiers moyens de fixation (18) du guidon (11) comprennent:
- un corps tubulaire avant (20) galbé pour accueillir ladite section centrale (12) dudit guidon (11), ledit corps tubulaire avant (20) comprenant une partie avant (21) galbée pour entourer une face avant (12a) de ladite section centrale (12), et une partie arrière (22) galbée pour s'accoupler avec une première extrémité (23a) d'un tirant de serrage (23),
- et une portion avant (17a) de ladite extension centrale (17), galbée pour s'appuyer sur une face arrière (12b) de ladite section centrale (12) dudit guidon (11);
ladite section centrale (12) dudit guidon (11) étant verrouillée entre ladite partie avant (21) dudit corps tubulaire avant (20) et ladite portion avant (17a) de ladite extension centrale (17);
lesdits deuxièmes moyens de fixation (19) comprenant:
- un corps tubulaire arrière (24) galbé pour accueillir une section d'extrémité d'un tube d'une fourche, ledit corps tubulaire arrière (24) comprenant une partie arrière (24a) galbée pour entourer une face arrière de ladite section d'extrémité d'un tube d'une fourche, et une partie avant (24b) galbée pour s'accoupler à une deuxième extrémité (23b) dudit tirant de serrage (23),
- et une portion arrière (17b) de ladite extension centrale (17), galbée pour s'appuyer sur une face avant de ladite section d'extrémité dudit tube;
ledit tirant de serrage (23) étant positionné pour traverser longitudinalement ladite extension centrale (17), et étant configuré pour relier ledit corps tubulaire avant (20) et ledit corps tubulaire arrière (24).

2. Groupe de guidon selon la revendication 1, **caractérisé en ce que** ledit tirant de serrage (23) comprend une tête d'accrochage et une tige.

3. Groupe de guidon selon l'une ou plusieurs des revendications précédentes, **caractérisé en ce que** ledit corps tubulaire avant (20) présente, à hauteur d'une partie arrière de celui-ci (22), une ouverture arrière (22a) galbée pour permettre le passage de ladite tige dudit tirant de serrage (23).

4. Groupe de guidon selon l'une ou plusieurs des revendications précédentes, **caractérisé en ce qu'**il comprend un dispositif de blocage antidévissage (25) pour ledit tirant de serrage (23).

5. Groupe de guidon selon l'une ou plusieurs des revendications précédentes, **caractérisé en ce que** ladite section centrale (12) dudit guidon (11) présente un premier trou passant longitudinal (30), configuré pour permettre le passage d'un outil de vissage dudit tirant de serrage (23).

6. Groupe de guidon selon l'une ou plusieurs des revendications précédentes, **caractérisé en ce que** ladite partie avant (21) dudit corps tubulaire avant (20) présente un deuxième trou passant longitudinal (31), disposé coaxialement audit premier trou passant longitudinal (30) de ladite section centrale (12) dudit guidon (11), ledit deuxième trou passant longitudinal (31) étant configuré pour permettre le passage d'un outil de vissage du tirant de serrage (23).

7. Groupe de guidon selon l'une ou plusieurs des revendications précédentes, **caractérisé en ce que** ladite portion avant (17a) de ladite extension centrale (17) présente deux évidements latéraux (50) contre-galbés par rapport à la surface de la face arrière (12b) de la section centrale (12) du guidon (11).

8. Groupe de guidon selon l'une ou plusieurs des revendications précédentes, **caractérisé en ce que** ladite portion avant (17a) présente une cavité supérieure (51) et une cavité inférieure (52), chacune d'entre elles étant galbée pour s'accoupler avec une portion correspondante à gradin (53, 54) définie sur ledit corps tubulaire avant (20).

9. Groupe de guidon selon l'une ou plusieurs des revendications précédentes, **caractérisé en ce que** ledit corps tubulaire arrière (24) comprend une partie arrière (24a) galbée en forme d'arc cylindrique, ladite partie avant (24b) étant définie par un relief tronconique se développant vers l'avant, présentant un trou fileté (60) configuré pour visser ledit tirant de serrage (23) avec ladite tige, ladite partie avant (24b) étant reliée à ladite partie arrière (24a) par l'intermédiaire de deux portions latérales (24c) dudit corps tubulaire arrière (24).

10. Groupe de guidon selon l'une ou plusieurs des revendications précédentes, **caractérisé en ce que** ladite portion arrière (17b) de ladite extension centrale (17) présente deux évidements latéraux (70) dont chacun est galbé pour s'accoupler avec une portion correspondante à gradin (24d) définie sur une portion latérale (24c) dudit corps tubulaire arrière (24), ladite portion arrière (17b) présentant une cavité supérieure (71) et une cavité inférieure (72), chacune ayant la forme d'un arc de cercle, qui est configuré pour s'appuyer sur la face avant d'un tube d'une fourche.
